# EUROPEAN PATENT APPLICATION

(11) **EP 2 178 224 A1**
(43) Date of publication of application: **21.04.2010**
(21) Application number: 08757894.4
(22) Date of filing: 01.07.2008
(51) Int. Cl.: H04B 7/204, H04J 13/00

(54) **HIGH SPEED UPLINK PACKET ACCESS METHOD IN MULTI-CARRIER TD-SCDMA SYSTEM**

(30) Priority: 05.07.2007 CN 200710129376; 07.09.2007 CN 200710145316
(71) Applicant: ZTE Corporation, Shenzhen, Guangdong 518057 (CN)
(72) Inventor: ZHANG, Yincheng, Guangdong 518057 (CN); CHEN, Hui, Guangdong 518057 (CN); LIU, Hu, Guangdong 518057 (CN)
(74) Representative: Jeuland, Mickaël
(86) International application number: PCT/CN2008/071500
(87) International publication number: WO 2009/006821

(57) **Abstract**

A high speed uplink packet access method and system used for multi-carrier TD-SCDMA system are disclosed. The method comprises the following steps: carrier resources on which the scheduling enhanced physical uplink channels are configured are allocated to user equipment; the enhanced absolute grant channel and the enhanced HARQ acknowledgement indicator channel are configured on the allocated carrier resources; the data from the enhanced dedicated transport channel are mapped through media access control layer onto the enhanced dedicated channel and further mapped onto the scheduling enhanced physical uplink channel; the scheduling enhanced physical uplink channels are granted to the user equipment through the enhanced absolute grant channel, so as to transmit the data from the enhanced dedicated transport channel to the base station; the base station feeds back the status information about receiving the data from the enhanced dedicated transport channel to the user equipment through the enhanced HARQ acknowledgement indicator channel. With the present invention, the carrier resources in multi-carrier TD-SCDMA system are utilized sufficiently and thus the cell uplink transport throughput is improved.

## Description

### Filed of the Invention

The present invention relates to communication field, in particular to a high speed uplink packet access method in multi-carrier time division synchronization code division multiple access system and the system thereof.

### Background of the Invention

In order to satisfy the increasing demand for high speed uplink packet data service and also to better support the higher service quality in corporation with the high speed downlink packet access technology (HSDPA) technology, it is introduced respectively into Re16 and Re17 through 3GPP the high speed uplink packet access (HSUPA) technology based on the wideband code division multiple access (WCDMA) and time division synchronization code division multiple access (TD-SCDMA), which is also called as enhanced uplink or enhanced dedicated channel (E-DCH) technology. Higher user peak value rate and cell data throughput can be obtained through HSUPA which uses the technologies of hybrid automatic repeat request (HARQ), high order modulation (16QAM), node B quick schedule and rise over thermal (RoT) control based on T/P and so on, and the stable RoT control can be achieved.

HSUPA inherits the technologies of HARQ, quick schedule and so on from HSDPA based on which it increases some particular enhanced technologies of uplink transport.

HSUPA uses asynchronous HARQ mode of increase redundance (IR), improving the performance of system by obtaining re-transport merge and coding gain. The re-transport system also uses the stop and wait modes of N channel and so on as same as the HSDPA.

On physical layer bearer aspect, the HSUPA introduces enhance physical uplink channel (E-PUCH) to bear the corresponding transport channel E-DCH. At the same time, in order to achieve the corresponding control, schedule and feedback, the HSUPA introduces into the physical layer three physical control channels, an enhanced random access uplink control channel (E-RUCCE), an enhanced absolute grant channel (E-AGCH) and an enhanced HARQ acknowledgement indicator channel (E-HICH), wherein the E-RUCCH is used for requesting grant to transmit date under the condition that user equipment (UE) in CELL-DCH status has no resource grant, with the transport mode being preemptive access method and the process same as the physical random access channel (PRACH) and the E-RUCCH can share physical code channel with the PRACH. If the UE having grant currently, it is also possible that the current schedule information (SI) of the UE can be multiplexed in MAC-e protocol data unit (PDU) of E-PUCH to be transmitted to the node B, for achieving the target of schedule request. The schedule information (SI) includes information of power margin, link loss, buffer size and so on.

The E-AGCH is used for the node B to transmit to the UE the schedule resource grant information which includes the physical control information as follows: power grant information, time slot grant information, code channel grant information, temporary user network identity, the number of the E-UCCH, resource duration time indication, the E-DCH cyclic sequence number, E-HICH channel indication and so on.

The E-HICH is used for the node B to feedback to the UE acknowledgement (ACK)/non-acknowledgement (NACK) information of each transport block. In order to decrease the physical channel overhead, the E-HICH uses the method of secondary spread spectrum, therefore achieving at most 80 signature users borne on one existing physical code channel. At the same time, the user signature sequence and the distributing resource are correlated with each other dynamically, which can meet the demand of supporting large capacity data users being on line at the same time.

The E-AGCH channel is allocated to the UE by radio network controller (RNC) during the establishment/reconfiguration of the radio bearer. The management and the distribution of the E-AGCH are performed in integration method wherein one UE is allocated with one set which can include one to four E-AGCH physical channels. The UE monitors all the E-AGCH channels to read in every transport time interval (TTI) (5ms) the relative schedule grant information in at most one E-AGCH channel according to the UE identification, in order to carry out the emission of the E-PUCH channel.

One cell can be configured with multiple E-HICH physical channels. One to four E-HICH physical channels are allocated to the user equipment by RNC during the establishment/reconfiguration of the radio bearer. In practice, in each TTI, one of physical channels is dynamically allocated to the UE by the node B through the E-AGCH.

The HSUPA introduces MAC-e/MAC-es sublayer (entity) into the MAC layer of the UE and the node B/RNC, in order to achieve the relative functions of schedule, priority process, feedback, re-transport and so on. On the network side, resource grant and ACK/NACK feedback are directly given by the MAC-e sublayer positioned in the node B, which can obviously improve the speed of the schedule and transport/re-transport and decrease the entire time delay of the data transport. On the network side, the MACes sublayer is positioned in the RNC, for ensuring the sequential transport of data packet. In addition, on UE side, the UE selects in each TTI (5ms), the enhanced transport format combination (E-TFC) based on the current grant information and the reference E-PUCH power under the base station closed loop control, obtaining the appropriate transport block size and modulation mode (the modulation mode and the transport block size have veiled association).

Besides the transport mode based on grant (namely, scheduling transport), the HSUPA also introduces non-scheduling transport to solve the requirements of time delay sensitive service and ensure the quality of service (OoS) of speed service. Resources of the scheduling transport can be allocated in real time by the node B which comprehensively considers the factors of schedule request of all UEs, the radio broadcasting environment, interference suppression of the neighboring area and so on. Such schedule method is quite suitable for the services with strong unexpectedness, great flow fluctuation and insensitiveness of time delay. With the non-scheduling transport mode, the transmitted resources are semi-statically allocated in advance by the RNC, which mode is suitable for the services sensitive to time delay, such as signaling radio bearer (SRB), the guarantee bit rate (GBR) and so on. From the view of bearer level, the related resources (such as HARQ entity) of these two schedule methods are mutually independent. At most 8 HARQ processes are allowed for single carrier of each UE wherein the scheduling transport and non-scheduling transport respectively use 4 HARQ processes.

The HSUPA technology of TD-SCDMA system in the specification 3GPP is based on a single carrier system, namely, one cell one carrier wherein based on quadrature phase shift keying (QPSK), the theoretical peak speed can be up to 1.1 Mbps, while based on 16QAM the theoretical peak speed can be up to 2.2 Mbps. The relative detailed information may be obtained referring to 3GPP. However, in other fields, such as the specification of China Communication Standardized Protocol (CCSA), the TD-SCDMA system is based on multi-carrier system. The multi-carrier TD-SCDMA system has the following characteristics: one cell comprises multiple carriers in multiple carrier TD-SCDMA system. One of the multiple carriers is the main carrier, and other carriers are assistant carriers. All or part of the common channels are established and used only on the main carrier. In order to take fully advantage of the carrier resources of the multi-carrier TD-SCDMA system and improve the cell uplink transport throughput, it is necessary to introduce the HSUPA technology into the multi-carrier TD-SCDMA system. While when introducing the HSUPA technology into the multi-carrier TD-SCDMA system, the difference between the multiple carrier TD-SCDMA system and the single carrier TD-SCDMA system needs to be considered.

### Summery of Invention

In view of the one or more questions above mentioned, the present invention provides a high speed uplink packet access method and system used for multi-carrier TD-SCDMA system.

The high speed uplink packet access method used for multi-carrier TD-SCDMA system according to the present invention comprises scheduling transport and non-scheduling transport.

Meanwhile, the scheduling transport comprises: E-PUCH, E-AGCH and E-HICH physical channel resources are configured on one or more carriers in the cell simultaneously; the E-PUCH physical channel carrier resource is allocated to a certain user equipment in the cell and the E-AGCH and E-HIICH physical channel resources are allocated on this carrier; as for the configured carrier resources, a MAC-e/MAC-es (enhance media access control) entity is established for user equipment respectively on the network side and the terminal side, and the scheduling E-DCH transport data are mapped to the E-DCH transport channel through the entity and further are mapped to the E-PUCH physical channel resource of the carrier; on the allocated carrier resources, the node B, through an E-AGCH physical channel, dynamically schedules and grants to the user equipment the E-PUCH physical channel resources on the carrier, for scheduling the E-DCH data transport, and feeds back the status information of the transport and reception of the scheduling E-DCH data on the carrier through an E-HICH channel on the carrier.

Meanwhile, the non-scheduling transport comprises: one carrier is allocated to the user equipment within the cell, the E-PUCH physical channel resource transmitted by the non-scheduling E-DCH is allocated on the carrier, and the non-scheduling E-DCH transport data are transmitted through the resource.

Meanwhile, as for one user equipment, only one of the scheduling E-DCH transport data or the non-scheduling E-DCH transport date can be transmitted in one same transport time interval.

Meanwhile, as for one user equipment, its allocated non-scheduling E-PUCH physical channel resource and the scheduling E-PUCH physical channel resource can be on a same carrier or on different carriers; but the carriers where the non-scheduling E-PUCH physical channel resource and the scheduling E-PUCH physical channel resource may be same or different for all user equipments in the cell.

Meanwhile, the process of allocating the E-PUCH physical channel carrier resource comprises the following steps: the radio network controller requests the base station to allocate the resource used for transmitting the E-DCH transport data to the user equipment; the base station in response of the request of the radio network controller, allocates the E-PUCH physical channel carrier resource to the user equipment, and allocates the E-AGCH physical channel and the E-HICH physical channel on the E-PUCH physical channel carrier resource.

Alternatively, the process of allocating the E-PUCH physical channel carrier resource comprises the following steps: the radio network controller allocates the E-PUCH physical channel carrier resource to the user equipment and requests the base station to allocate the the resource used for controlling the transport of the E-DCH transport data to the user equipment; the base station, in response of the request of the radio network controller, allocates the E-AGCH physical channel and the E-HICH physical channel on the E-PUCH physical channel carrier resource.

The high speed uplink packet access system used for multi-carrier TD-SCDMA system, according to the present invention comprises a resource allocation unit, for allocating the E-PUCH physical channel carrier resource to the user equipment and allocating the E-AGCH physical channel and the E-HICH physical channel on the allocated E-PUCH physical channel carrier resource; a data mapping unit, for mapping the E-DCH transport data onto the E-PUCH physical channel; and a data transport unit for scheduling and granting the E-PUCH physical channel to the user equipment through the E-AGCH physical channel so as to transmit the E-DCH transport data to the base station, and feeding back to the user equipment the status information of the E-DCH transport data received by the base station, through the E-HICH channel.

Meanwhile, the E-DCH transport data are mapped to the E-DCH transport channel by the data mapping unit through media access control layer and further mapped onto the E-PUCH physical channel.

Another high speed uplink packet access method used for multi-carrier TD-SCDMA system according to the present invention comprises allocating to the user equipment the E-PUCH physical channel and the non-scheduling E-PUCH physical channel which can be scheduling ; and the user equipment selects the scheduling E-PUCH physical channel or non-scheduling E-PUCH physical channel to carry out the scheduling or non-scheduling data transport, wherein the scheduling E-PUCH physical channel and the non-scheduling E-PUCH physical channel can be positioned on a same carrier or different carriers.

In the present invention, the HSUPA technology can be independently supported on each carrier in a multiple carrier cell. One UE is statically configured to carry out the E-DCH transport on one carrier. Different UEs can carry out the scheduling E-DCH transport on different carriers. With the present invention, the carrier resources in the multiple carrier TD-SCDMA system can be utilized sufficiently, thus improving the cell uplink transport throughout.

### Brief Description of Drawings

The drawings illustrated herein provide a further understanding of the present invention and constitute a part of the application. The exemplary embodiments of the present invention and the explanation thereof are given for explaining the present invention, and thus are not limitative of the present invention, in which:
Fig.1 is a flowchart of data transport method according to an embodiment of the present invention;
Fig.2 is a schematic view of data mapping process in the method shown in Fig.1;
Fig.3 is a schematic view of data reception process in the method shown in Fig.1;
Fig.4 is a block diagram of data transport system to realize the method shown in Figs.1 to 3 and
Fig.5 is a flow chart of data transport method according to another embodiment of the present invention.

### Detailed Description

The embodiments of the present invention are detailed in connection with the drawings.

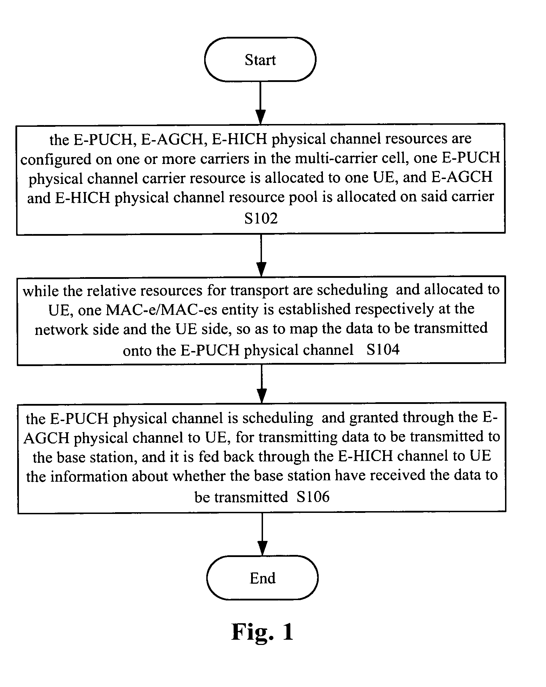

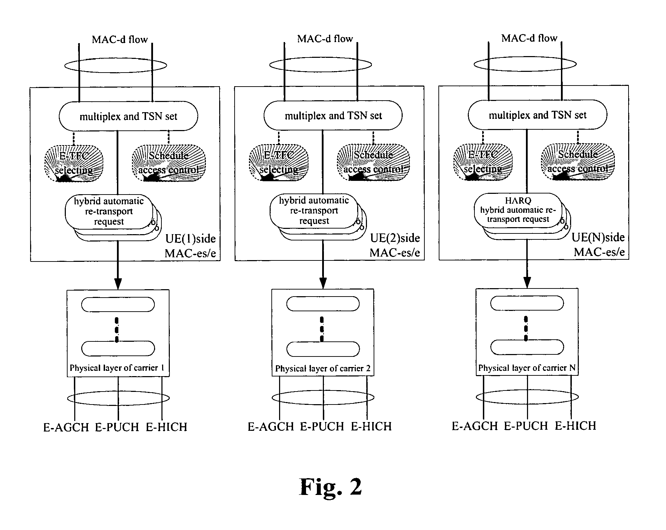

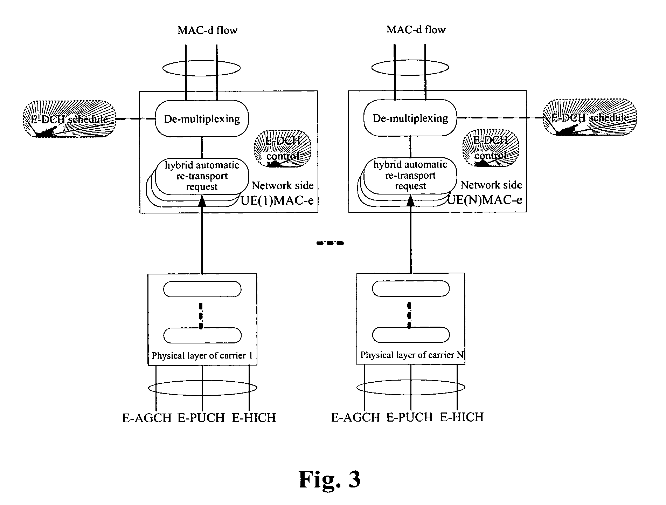

In a multiple carrier TD-SCDMA system, if a multiple carrier cell (including N carriers) has been established, as shown in Fig.1, the high speed uplink packet access method according to the embodiment of the present invention comprises the following steps:
S102, allocating an E-PUCH physical channel carrier resource to the user equipment and allocating the E-AGCH physical channel and the E-HICH physical channel on the allocated E-PUCH physical channel carrier resource.
   In Step S102, firstly, the E-PUCH, E-AGCH and E-HICH physical channel resources are simultaneously configured on one or more carriers in the multiple-carrier cell.
   During the process, compared with the corresponding physical channel in the HSUPA technology of the single carrier TD-SCDMA system, the E-PUCH, E-AGCH and E-HICH physical channels configured on each carrier have same structure.
   On network side, according to the existing network structure (namely, the radio network consists of two network elements (the RNC and the node B), and the RNC and the node B are connected through Iub interface), the process can be carried out by the RNC initiating through the Iub interface to the node B a physical shared channel reconfiguration progress in the node B application part (NBAP). When the E-PUCH, E-HICH and E-AGCH physical channel resource pools are configured on the "physical shared channel reconfiguration request" message, the "physical shared channel reconfiguration request" message comprises carrier attribute information to indicate the carrier frequency attribute of these physical channels, so as to configure the E-PUCH, E-HICH and E-AGCH physical channel resource pools on the plural carriers. If the radio network on the network side just has one network element (node B), then the process can be carried out by the cooperation between the relative functional modules inside the node B.
   During the process, as shown in Fig.3, an E-DCH schedule entity is established in the node B simultaneously for each carrier, to manage the above physical channel resource on the carrier.
   In one multiple carrier cell, when the RNC and/or the node B determine to allocate the E-PUCH resource to one UE for carrying out the E-DCH transport, firstly, one E-PUCH physical channel carrier resource is allocated to the UE. At the same time, similar to the HSUPA technology in the single carrier TD-SCDMA system, the RNC and/or the node B need to allocate through high level signaling to the UE the E-AGCH and E-HICH physical channel resource pool on the carrier for controlling the signaling transport, and indicates the allocated E-PUCH physical channel carrier resource through the carrier attribute of the E-AGCH and E-HICH physical channel. During the configuration and the sequential use of these resources by the RNC and/or the node B, the uplink and/or downlink carrier of the UE and the reception and/or emission ability of the physical channel need to be considered, and therefore the relative high level signaling in this process can carry the relative information of the UE ability.
   Concretely, on the network side, according to the existing network structure, it is usually the RNC to determine to perform the E-DCH transport for one UE, and initiate through the Iub interface to the Node B a radio link establish process and a radio link reconfiguration process in the NBAP protocol, so as to allocate and schedule the relative resources of the E-DCH transport. Usually, the node B is used for allocating to the UE the E-AGCH and E-HICH physical channel resource pools including the allocation of the carrier attributes of these physical channels, which are transmitted to the RNC through the "radio link setup response" or "radio link reconfiguration ready" message. While the E-PUCH physical channel carrier resource can be allocated by the RNC or the node B. If the E-PUCH physical channel carrier resource is allocated by the RNC, then it is included in the "radio link setup request" or "radio link reconfiguration prepare" message transmitted to the node B the indication information relative to the E-PUCH physical channel carrier resource or the carrier information of explicitly indicating the E-PUCH physical channel carrier resource or the carrier information of inexplicitly indicating the E-PUCH physical channel carrier resource by associating with other physical channel (such as DPCH physical channel, including carrier attribute). Also, the Node B just can allocate to the UE the E-AGCH and E-HICH physical channel resource pool on the carrier indicated by the indication information. If the E-PUCH physical channel carrier resource is allocated by the node B, then it is included in the "radio link setup response" or "radio link reconfiguration ready" message transmitted to the RNC the indication information relative to the E-PUCH physical channel carrier resource which is usually inexplicitly indicated through the carrier attribute of the E-AGCH and E-HICH physical channels, because the E-AGCH and the E-HICH physical channels must be allocated on the carrier where the E-PUCH physical channel carrier resource is located. If the radio network on the network side only has one network element (the node B), then this process can be carried out by the cooperation between the relative functional modules inside the node B.
   The above allocated scheduling E-DCH transport relative resource is transmitted to the UE by the RNC or the node B through high level signaling. According to the existing network structure, the process is carried out by the RNC initiating through the Uu interface (the interface between the network side and the UE) to the UE the processes, such as the RRC connection establishment process, the radio bearer establishment process, the radio bearer reconfiguration process, the radio bearer release process, the transport channel reconfiguration process, the physical channel reconfiguration process, the cell update process and so on in the radio resource control (RRC) protocol. The relative resources configuration information of the scheduling E-DCH transport comprises the corresponding "RRC connection setup" message, the "radio bearer setup" message, the "radio bearer reconfiguration" message, the "radio bearer release" message, the "transport channel reconfiguration" message, the "physical channel reconfiguration" message and the "cell update confirm" message, wherein the physical channel configuration information comprises the carrier attribute information of the physical channel. If the radio network on the network side just has one network element (node B), the relative resources configuration information of the scheduling E-DCH transport is transmitted to the UE by the node B through the process and message similar to the above.
   S104, the E-DCH transport data is mapped onto the E-PUCH physical channel. While allocating the relative resources of the scheduling E-DCH transport to the UE, a MAC-e/MAC-es entity is respectively established on the network side and the UE side, as for the allocated carrier. Same as the above HSUPA technology in the single carrier system, it is needed on the MAC-e/MAC-es sublayer to establish for each UE one MAC-e/MAC-es entity respectively in the node B/RNC on the network side and inside the UE, so as to complete the relative functions of schedule, priority treatment, feedback, re-transport and so on along with other relative entities. As shown in Fig.2 and Fig.3, each UE just establishes the MAC-e/MAC-es entity based on the allocated E-PUCH physical channel carrier resources, but different UEs can establish the MAC-e/MAC-es entities on different carriers. Compared with the HSUPA technology of the single carrier TD-SCDMA system, the MAC-e/MAC-es entity and the functional entity are completely identical. The E-DCH transport data are mapped onto the E-DCH channel through the MAC-e/MAC-es entity and further mapped to the scheduling E-PUCH physical channel.
S106, the E-PUCH physical channel is scheduling and granted to the user equipment through the E-AGCH physical channel for transmitting the E-DCH transport data to the base station, and feeding back through the E-HICH channel to the UE the status information of the E-DCH transport data received by the base station.

On one carrier allocated with the E-PUCH physical channel carrier resource, the E-PUCH physical channel resource on the carrier is dynamically scheduling and granted to the UE by the node B through an E-AGCH physical channel. On the UE side, the E-DCH transport data are mapped onto the E-PUCH physical channel resource of the carrier through the MAC-e/MAC-es entity; and on the node B of the network side, the E-DCH data are received on the E-PUCH physical channel of the carrier. Afterwards, ACK/NACK information is fed back by the node B through an E-HICH channel.

At a certain TTI, if the node B determines to grant the UE to carry out the E-DCH transport, then the node B dynamically allocates the E-PUCH physical channel resource to the UE on the carrier allocated with the E-PUCH physical channel resource, according to the resource configuration condition, and grants, through one E-AGCH physical channel on the carrier, to the UE the E-PUCH physical channel resource, for the E-DCH data transport.

On the UE side, at a certain TTI, according to the grant information received from the E-AGCH channel, the E-DCH transport data are mapped onto the granted E-PUCH physical channel of the allocated carrier through the MAC-e/MAC-es entity; and in the node B on the network side, the E-DCH data are received on the granted E-PUCH physical channel on the allocated carrier, wherein the mapping process of the E-DCH data onto the E-PUCH physical channel and the treatment process of the physical layer are same as the HSUPA technology in the single carrier TD-SCDMA system.

During the process, the E-AGCH physical channel for transmitting the E-PUCH physical channel is one selected from the E-AGCH physical channel resource pool allocated to the UE. Normally, after the UE is allocated with the relative physical channel resource of the above E-DCH transport, the UE needs to monitor all the E-AGCH physical channels in the allocated E-AGCH physical channel resource pool, and searches and identifies one E-AGCH channel that is truly allocated to the UE to use, through "UE identification" on the E-AGCH channel. While on the network side, the nodes B needs to choose one from the E-AGCH physical channel resource pool allocated to the UE, for transmitting the E-PUCH physical channel schedule grant information.

While the node B dynamically allocates the E-PUCH physical channel resource to the UE through the E-AGCH, the node B also indicates, through the E-HICH indication information on the E-AGCH, one E-HICH channel positioned on the same carrier which is used during subsequently transmitting ACK/NACK, with the indication method identical to the HSUPA technology in the single carrier TD-SCDMA system.

On the UE side, according to the configuration condition of the E-HICH physical channel pool and the E-HICH channel indication information on the E-AGCH channel, the E-HICH physical channel is received and further it is received the receiving condition information of the E-DCH transport fed back by the node B, namely the ACK/NACK information.

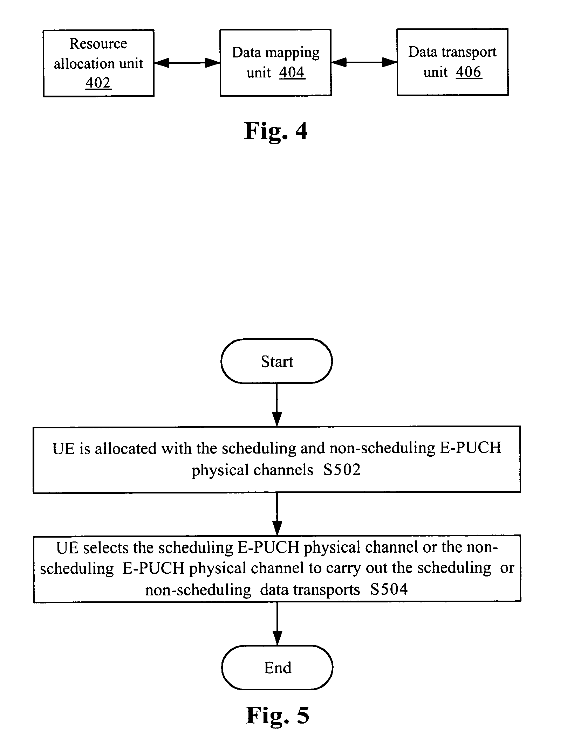

Hereinafter, referring to Fig 4, the data transport system used for carrying out the above process is described. As shown in Fig.4, the data transport system comprises: a resource allocation unit 402 for allocating the E-PUCH physical channel carrier resource to the user equipment and allocating the E-AGCH physical channel and the E-HICH physical channel on the allocated E-PUCH physical channel carrier resource; a data mapping unit 404 for mapping the data to be transmitted onto the E-PUCH physical channel; and a data transport unit 406 for scheduling and granting the E-PUCH physical channel to the user equipment through the E-AGCH physical channel for transmitting to the base station the data to be transmitted, and feeding back through the E-HICH channel to the user equipment the status information of the base station receiving the data to be transmitted, wherein the data to be transmitted are mapped onto the E-DCH channel by the data mapping unit through the media access control layer, and further mapped onto the E-PUCH physical channel. The data to be transmitted are the data from the enhanced dedicated transport channel.

In addition, during the non-scheduling transport process, the RNC allocates a carrier resource to each UE. The relative resource is allocated on this carrier with a relative resource allocation method of the non-scheduling E-DCH transport, which is same as the HSUPA technology in the single carrier TD-SCMDA system, and the resource is used for carrying out the non-scheduling E-DCH transport.

Incidentally, at a certain TTI, if the UE is allocated with the scheduling or non-scheduling E-PUCH physical channel resource, then on the corresponding carrier, the UE uses the scheduling or non-scheduling E-PUCH physical channel resource to carry out the scheduling or non-scheduling transport.

In addition, at a certain TTI, as shown in Fig.5, if the UE is allocated with the scheduling and non-scheduling E-PUCH physical channel resources (S502) at the same time, then the user equipment can choose the scheduling E-PUCH physical channel or the non-scheduling E-PUCH physical channel to carry out the scheduling or non-scheduling data transport (S504), wherein the scheduling E-PUCH physical channel and the non-scheduling E-PUCH physical channel can be positioned on the same or different carriers.

All in all, in the present invention, the HSUPA technology can be independently supported on each carrier of the multiple carrier cell. One UE is statically configured to carry out the scheduling E-DCH transport on one carrier, and different UEs can carry out the scheduling E-DCH transport on different carriers. The carrier resources in the multiple carrier TD-SCDMA system can be utilized sufficiently and thus the cell uplink transport throughout is improved.

The descriptions above are only preferable embodiments of the present invention, which are not used to restrict the present invention. For those skilled in the art, the present invention may have various changes and variations. Any amendments, equivalent substitutions, improvements etc. within the spirit and principle of the present invention are all concluded in the scope of protection of the present invention.

## Claims

1. A high speed uplink packet access method used for multi-carrier TD-SCDMA system, comprising:
allocating to a user equipment a carrier resource on which scheduling enhanced physical uplink channels are configured, and configuring on the allocated carrier an enhanced absolute grant channel and an enhanced HARQ acknowledgement indicator channel;
mapping the data from the enhanced dedicated transport channel onto the said scheduling enhanced physical uplink channel in media access control layer; and
granting said scheduling enhanced physical uplink channel to the user equipment through the enhanced absolute grant channel for transmitting the date from the enhanced dedicated transport channel to the base station, and base station feeding back the status information about the receiving data from the enhanced dedicated transport channel to the user equipment through the enhanced HARQ acknowledgement indicator channel.

2. The high speed uplink packet access method according to Claim 1, wherein the method further comprises:
allocating to the UE the carrier resource on which non-scheduling enhanced physical uplink channels are configured, and transmitting the data from the enhanced dedicated transport channel to the base station through the non-scheduling enhanced physical uplink channel.

3. The high speed uplink packet access method according to Claim 1, wherein the method also comprises:
the physical channel resources of the enhanced physical uplink channel, the enhanced absolute grant channel and the enhanced HARQ acknowledgement indicator channel are simultaneously configured on one or more carriers in the multiple-carrier cell.

4. The high speed uplink packet access method according to Claim 1 or 2, wherein in one transport time interval, the UE choose the scheduling enhanced physical uplink channel or the non-scheduling uplink enhanced physical channel to transmit the data from the enhanced dedicated transport channel.

5. The high speed uplink packet access method according to Claim 1 or 2, wherein the carrier resources on which the scheduling enhanced physical uplink channel and the non-scheduling enhanced physical uplink channel are allocated to the UE are the same carrier or different carriers.

6. The high speed uplink packet access method according to Claim 1, wherein the process of allocating to the UE the carrier resource on which the scheduling enhanced physical uplink channel are configured comprises the following steps:
radio network controller requests the base station to allocate to the user equipment the resource used for transmitting the data from the enhanced dedicated transport channel;
the base station, in response of the request of the radio network controller, allocates to the user equipment the carrier resource on which scheduling enhanced physical uplink channels are configured, and configuring an enhanced absolute grant channel and an enhanced HARQ acknowledgement indicator channel on the allocated carrier.

7. The high speed uplink packet access method according to Claim 1, wherein the process of allocating the carrier resource on which the scheduling enhanced physical uplink channels are configured to the UE comprises the following steps:
the radio network controller allocates the carrier resource on which scheduling enhanced physical uplink channels are configured to the user equipment and requests the base station to allocate to the user equipment the resource used to control the transport of the data from the enhanced dedicated transport channel; and
the base station, in response of the request of the radio network controller, configures the enhanced absolute grant channel and an enhanced HARQ acknowledgement indicator channel on said carrier on which the scheduling enhanced physical uplink channels are configured.

8. A high speed uplink packet access system used for multi-carrier TD-SCDMA system, comprising:
a resource allocation unit for allocating carrier resource on which scheduling enhanced physical uplink channel are configured to user equipment, and configuring the enhanced absolute grant channel and an enhanced HARQ acknowledgement indicator channel on the allocated carrier;
a data mapping unit, for mapping the data from the enhanced dedicated transport channel onto the scheduling enhanced physical uplink channel; and
a data transport unit, for granting the scheduling enhanced physical uplink channel to the user equipment through the enhanced absolute grant channel for transmitting the data from the enhanced dedicated transport channel to the base station, and the base station feeding back the status information about the receiving data from the enhanced dedicated transport channel to the user equipment through the enhanced HARQ acknowledgement indicator channel.

9. The high speed uplink packet access system according to Claim 8, wherein the data mapping unit maps the data from the enhanced dedicated transport channel onto said scheduling enhanced physical uplink channel in media access control layer.

10. A high speed uplink packet access method used for multi-carrier TD-SCDMA system, comprising:
allocating to user equipment a scheduling enhanced physical uplink channel and a non-scheduling enhanced physical uplink channel; and
the user equipment selecting the scheduling enhanced physical uplink channel or the non-scheduling enhanced physical uplink channel to carry out the scheduling or non-scheduling data transport.

11. The high speed uplink packet access method according to Claim 10, wherein the scheduling enhanced physical uplink channel and the non-scheduling enhanced physical uplink channel are allocated on the same carrier or different carriers.
